Europäisches Patentamt

European Patent Office

Office européen des brevets

(19)

(11) EP 1 013 963 B1

(12) EUROPEAN PATENT SPECIFICATION

(45) Date of publication and mention
of the grant of the patent:
**27.08.2003 Bulletin 2003/35**

(51) Int Cl.7: **F16F 9/53**

(21) Application number: **00105844.5**

(22) Date of filing: **18.06.1993**

(54) **Magnetoriheological fluid device**

Magnetorheolodische Flüssigkeitsvorrichtungen

Dispositif à fluides magnétorhéologiques

(84) Designated Contracting States:
**DE FR GB IT**

(30) Priority: **18.06.1992 US 900567**
**18.06.1992 US 900571**

(43) Date of publication of application:
**28.06.2000 Bulletin 2000/26**

(62) Document number(s) of the earlier application(s) in
accordance with Art. 76 EPC:
**93916607.0 / 0 644 987**

(73) Proprietor: **LORD CORPORATION**
**Erie, PA 16514-0038 (US)**

(72) Inventors:
• **Carlson, J. David**
**Cary, NC 27511 (US)**
• **Chrzan, Michael, J**
**Raleigh, NC 27606 (US)**
• **James, Frank, O.**
**Girard, PA 16417 (US)**

(74) Representative:
**Dunlop, Brian Kenneth Charles et al**
**c/o Wynne-Jones, Lainé & James**
**22 Rodney Road**
**Cheltenham Gloucestershire GL50 1JJ (GB)**

(56) References cited:
**EP-A- 0 129 363          FR-A- 2 579 283**
**GB-A- 2 027 517**

• **PATENT ABSTRACTS OF JAPAN vol. 008, no.
177 (M-317), 15 August 1984 (1984-08-15) & JP 59
069543 A (NISSAN JIDOSHA KK), 19 April 1984
(1984-04-19)**

## Description

Field of the Invention

Incompressible fluids have been used in shock absorbers and other dampers, as well as in elastomeric mounts, for decades. The use of controllable fluids, electrorheological (ER) and magnetorheological (MR) fluids in dampers, was first proposed in the early 1950's by Winslow in U.S. Patent No. 2,661,596. The use of a controllable fluid in a damper affords some intriguing possibilities relative to providing widely varying damping for varying conditions encountered by the damper. Nonetheless, the use of controllable fluids was generally restricted to the area of clutches, with a few exceptions, until the mid-1980's.

## Background and Summary of the Invention

FR-A-2579283 discloses a vibration damper having a housing containing a volume of magnetorheological fluid and a piston. A valve controls the flow of the fluid and a coil is supplied with electric current to create a magnetic field in the fluid so that the viscosity of the fluid is modified to control the damping.
Interest in the use of controllable fluids revived in the 1980's as activity in the area of controllable dampers increased. Most of the resurgent activity has occurred relative to ER dampers and associated fluids. While interest and development of ER fluid devices continues, performance of such systems have been disappointing from three standpoints:

1) the damping forces that can be generated by an ER fluid device are limited due to the relatively low yield strengths of the available fluids;
2) ER fluids are susceptible to contamination which significantly degrees performance; and,
3) the strong electric fields required by ER fluids necessitate complicated and expensive high-voltage power supplies and complex control systems.

Faced with these performance restrictions and searching for a technological breakthrough to overcome them, applicants turned to MR fluids with renewed interest and sought to optimise systems employing them. MR fluids inherently have higher yield strengths and are, therefore, capable of generating greater damping forces. Further, contamination does not pose the performance degradation threat for MR fluids that it does for ER fluids. Still further, MR fluids are activated by magnetic fields which are easily produced by simple, low-voltage electromagnetic coils.
It is therefore among the objects of the present invention to provide an MR damper with improved performance characteristics.
Enhancements include:

• defining dimensional/operational relationships which provide improved performance;

• devising piston designs in which the flow path for the magnetic flux is entirely contained within the piston itself;

• providing an improved twin-tube cylinder design capable of use (with some modification) with either the self-contained or spool piston;

• significantly reducing or eliminating MR fluid losses from the damper;

• providing an improved fluid valve for controlling the flow of the MR fluid to produce the desired damping forces.

These and other objects of the invention are accomplished by an apparatus for variably damping motion using an MR fluid according to claim 1.
The housing may be provided with a sleeve of ferrous material to increase the cross-sectional area of the return flow path for the magnetic flux, $A_{path}$, for configurations in which the return path for the magnetic flux is through the housing. Alternatively, the housing may be a twin-tube design; the magnet may be formed on a spool-shaped piston or wound as a toroid thereon; the magnet could be positioned within the twin-tube housing rather than on the piston; loss of MR fluid can be prevented by topping the damper with a less dense fluid, using a scraper and seal combination, or using a sealless design. The piston may be formed from conventional ferrous materials (in either solid or laminate form) or from powdered metals. These features may be embodied in a mount as well as in a damper.
Other features, advantages and characteristics of the present invention will become apparent after a reading of the following detailed description.

**Brief Description of Drawings**

Fig. 1 is a side view in partial section of a first embodiment of the MR damper;

Fig. 2 is an enlarged side view in partial section of the piston assembly depicted in Fig. 1;

Fig. 3 is schematic side view in partial section depicting the dimensional relationships of the first embodiment, the internal details being omitted for simplicity and clarity;

Fig. 4(a) is a graphic plot of flux density (B) vs magnetic field strength (H) for a particular MR fluid;

Fig. 4(b) is a plot of $B_{intrinsic}$ (J) vs field strength H for the same MR fluid;

Fig. 4(c) is a plot of $J^2$ vs H for the same MR fluid;

Fig. 4(d) is a plot of flux density (B) vs field strength (H) for a steel;

Fig. 4(e) is a plot of flux density (B) vs field strength (H) for a powdered metal;

Fig. 5(a) is a peak force (F) vs peak velocity (V) plot for different levels of current for a first damper configuration, with extension forces being shown as having negative values;

Fig. 5(b) is a peak force vs peak velocity plot for different levels of current for a second configuration which does not meet the preferred criteria for $A_{path}/A_{pole}$ with extension forces being shown as having negative values;

Fig. 5(c) is a peak force vs peak velocity plot for different levels of current for a third configuration which does not meet the preferred criteria for $A_{core}/A_{pole}$ with extension forces being shown as having negative values;

Fig. 6(a) is a peak force (F) vs current (A) plot for the first configuration operated at a stroke rate of 0.2 Hz and an amplitude of ±1.0 in. (peak velocity is 1.3 in./sec) with extension forces being shown as having negative values;

Fig. 6(b) is a peak force vs current plot for the second configuration operated at a stroke rate of 0.2 Hz and an amplitude of ±1.0 in. (peak velocity is 1.3 in./sec) with extension forces being shown as having negative values;

Fig. 6(c) is a peak force vs current plot for the third configuration operated at a stroke rate of 0.23 Hz and an amplitude of ±1.0 in. (peak velocity is 1.5 in./sec) with extension forces being shown as having negative values;

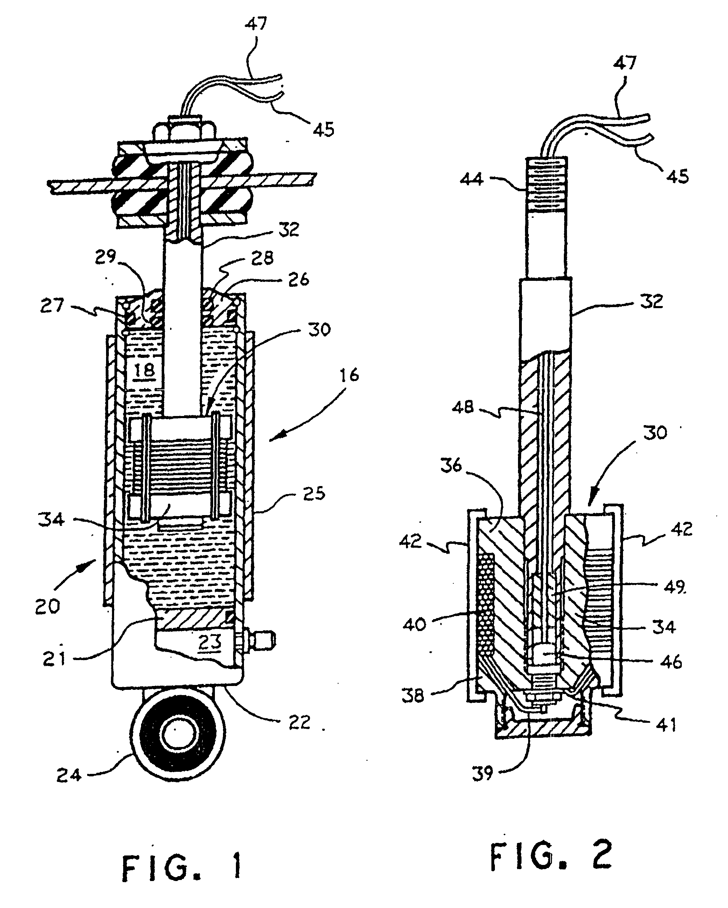

The embodiments disclosed in the Figures 1 to 6(c) are not covered by the present claims.

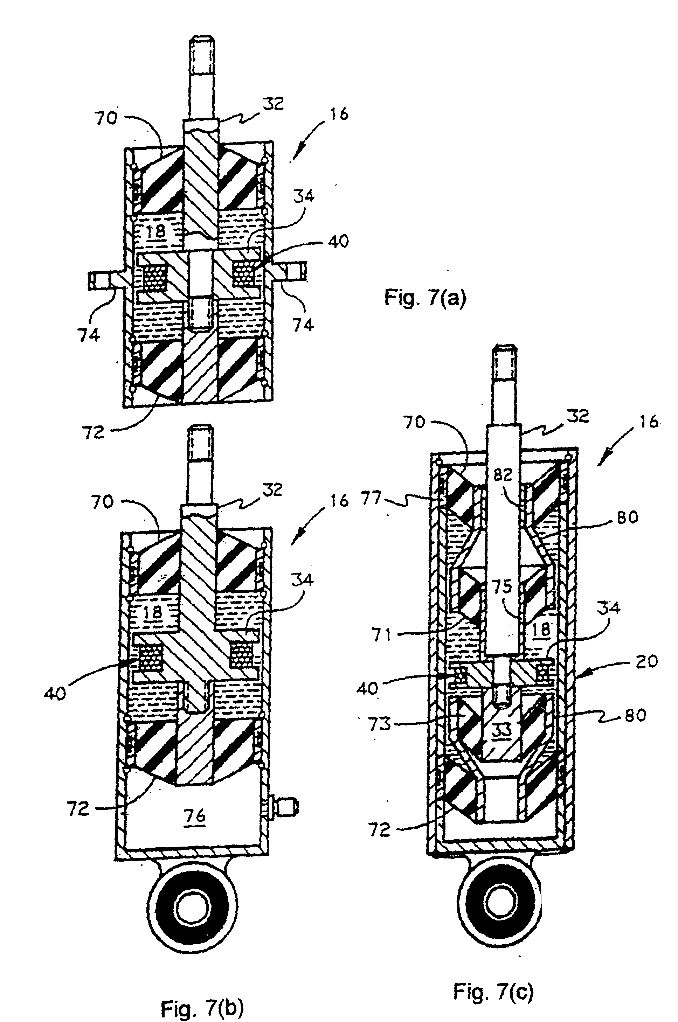

Fig. 7(a) is a schematic cross-sectional side view of a first sealless design;

Fig. 7(b) is a schematic cross-sectional side view of a second sealless design;

Fig. 7(c) is a schematic cross-sectional side view of a third sealless design;

**Description of the Preferred Embodiments**

An embodiment of a damper is depicted in Fig. 1 generally at 16. Damper 16 is made up of two principal components: housing 20 and piston 30. Housing 20 contains a volume of magnetorheological (MR) fluid 18. One fluid which has shown itself to be particularly well-suited for this application consists of carbonyl iron particles suspended in silicone oil. This MR fluid has a relative magnetic permeability between 3 and 15 at a magnetic flux density of .002 tesla (20 gauss). An MR damper has two principal modes of operation: sliding plate and flaw (or valve) modes. Components of both modes will be present in every MR damper, with the force component of the flow mode dominating.

Housing 20 is a generally cylindrical tube with a first closed end 22 with an attachment eye 24 associated therewith. A cylindrical sleeve 25 may be affixed to the inner cylinder by any conventional means (e.g., press fit, welding, adhesive) to increase the cross-sectional surface area of housing 20, as will be discussed in greater detail hereafter.

A second, or open, end of the cylinder is closed by end member 26. A first seal 27 extends about the outer periphery of member 26 to prevent fluid leakage between housing 20 and member 26. A second annular seal 28 is housed in a groove in the inner periphery of member 26 and seals against shaft 32. A scraper 29 can be used to wipe the MR fluid off the surface of shaft **32** so as to minimize loss of MR fluid past seal 28. As an additional means of preventing fluid loss, the upper regions of housing 20 can be filled with a second fluid which is immiscible with MR fluid or which can be separated from the MR fluid volume 18 by a floating baffle or rolling diaphragm (not shown).

Housing **20** is provided with a floating piston **21** to separate the MR. fluid volume **18** from pressurized accumulator **23.**

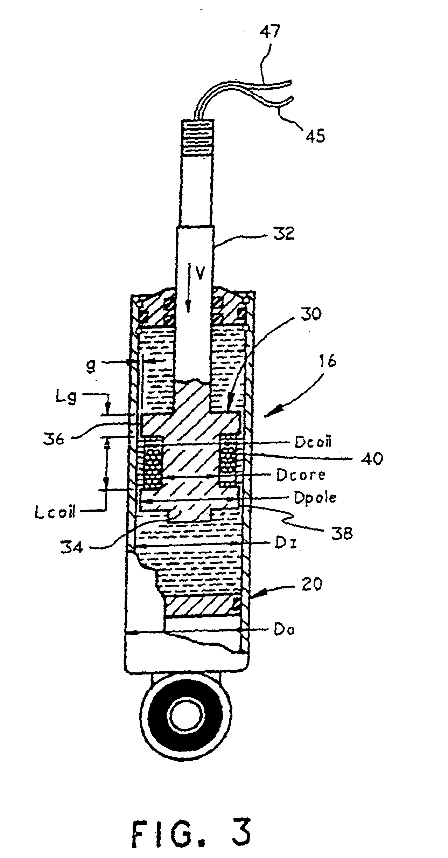

The first embodiment of piston assembly **30** is shown in greater detail in **Fig. 2.** Piston head **34** is spool shaped having an upper outwardly extending flange **36** and a lower outwardly extending flange **38**. Coil **40** is wound upon spool-shaped piston head **34** between upper flange **38** and lower flange **38**. Piston head **34** is made of a magnetically permeable material. such as low carbon steel, for example. Guide rails **42** are attached around the outside of piston head **34** at particular intervals. As shown in **Fig. 1** and 2, four guide rails **42** are shown spaced uniformly about the periphery of piston head **34**. Piston head **34** is formed with a smaller maximum diameter (in this case, $D_{pole}$, in **Fig. 3**) than the inner diameter, $D_I$ of housing 20. The external surfaces of guides **42** are contoured (radiused) to engage the inner diameter $D_I$ of housing 20. Guides 42 are made of nonmagnetic material (e.g., bronze, brass, nylon, or Teflon ® polymer) and maintain piston centered within gap 'g'. In this embodiment, gap g (in conjunction with coil **40**) functions as a valve to control the flow of MR fluid **18** past piston **34**.

Electrical connection is made to coil 40 through piston rod **32** by lead wires **46** and **47**. A first wire 45 is connected to a first end of an electrically conductive rod **48** which extends through piston rod **32** to Phono-jack connector **46**. The center connection of Phono-jack **46** is connected to a first end 39 of coil 40. The second end 41 of the windings of coil 40 is attached to a "ground" connection on the outside of Phono-jack 46. The electrical return path, then, includes piston rod 32 and the ground lead **47**. The upper end of piston rod 32 has threads 44 formed thereon to permit attachment of damper **16**, as depicted in Fig. 1. An external power supply, which provides a current in the range of 0-4 amps at a voltage of 12-24 volts, depending upon application, is connected to the leads 45 and **47**. An epoxy bushing 49 keeps rod 48 isolated from return path through piston rod 32. The cavity surrounding conductive rod 48 may also be filled with epoxy. The outer surface of coil 40 may be coated with epoxy paint as a protective measure.

The damper 16 of this first embodiment functions as a Coulomb or Bingham type damper, i.e., this configuration approximates an ideal damper in which the force generated is independent of piston velocity and large forces can be generated with low or zero velocity. This independence improves controllability of the damper making the force a function of the magnetic field strength, which is a function of current flow in the circuit.

**Fig. 3** schematically depicts the dimensional relationships of the damper **16**. The minimum diameter of the spool-shaped piston head 34 is the diameter of the core, $D_{core}$, and the diameter of the coil **40** is $D_{coil}$ while the length of the coil 40 is $L_{coil}$. As already noted, the gap or valve has a thickness g and the length of the pole is the width of flanges 36 and 38, which is also the length $L_g$ of gap g. The inside diameter of housing 20 is $D_I$, the outside diameter is $D_O$, the maximum diameter of the piston is $D_{pole}$ (making $g = \frac{D_I - D_{pole}}{2}$).

Efforts to optimize the performance of this embodiment of MR damper has led to identifying several key relationships interrelating dimensions to its operational parameters. In basic terms, the flow of magnetic flux will be heavily dependent on several critical "bottlenecks" in the flow path:

$A_{core}$ - the minimum lateral cross-sectional area of piston head 34 within the windings of coil 40, having a value of $\frac{\pi D_{core}^2}{4}$;

$A_{path}$ - a minimum lateral cross-sectional area of magnetically permeable material defining a return path for magnetic flux, having a value of $\frac{\pi (D_O^2 - D_I^2)}{4}$

$A_{pole}$ - a surface area of a magnetic pole of the piston, having a value of $\pi D_{pole} L_g$.

One design consideration is to minimize the amount of steel, i.e., to make $A_{core}$ and $A_{path}$ as small as possible. However, it has been found that the ratio of the bottlenecks $A_{core}$, and $A_{path}$ to $A_{pole}$ should be greater than a minimum threshold value defined by the ratio of the magnetic field strengths in the MR fluid and damper materials, giving rise to a competing design consideration. That ratio is $\frac{B_{opt}}{B_{knee}}$, where $B_{opt}$ is an optimum magnetic flux density in the MR fluid and $B_{knee}$ is the magnetic flux density at which the ferrous metal begins to become saturated.

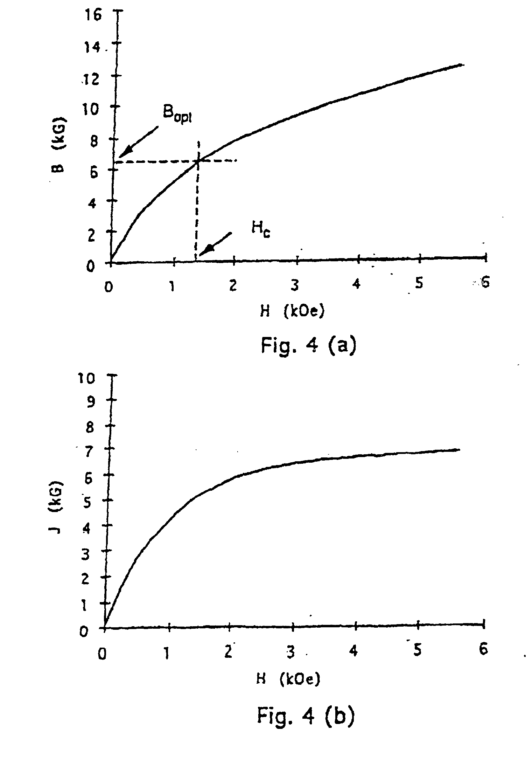

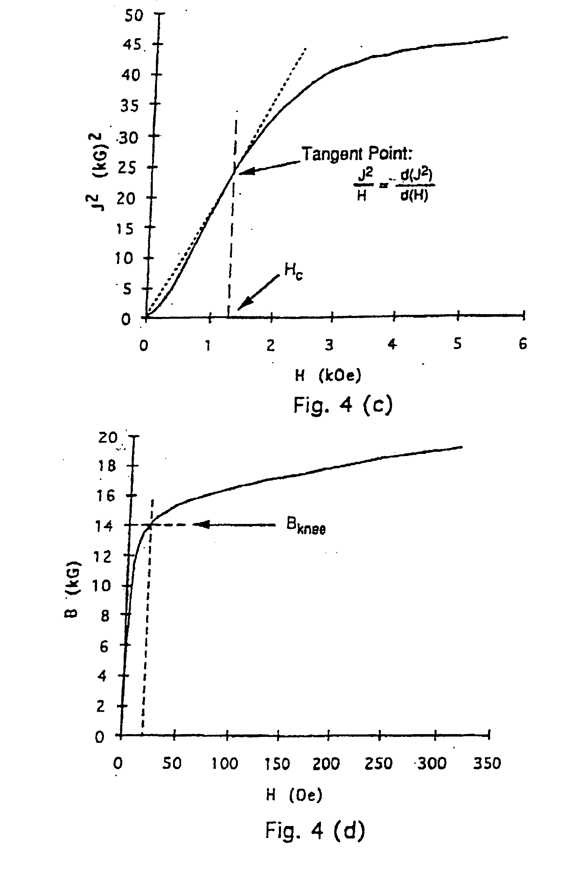

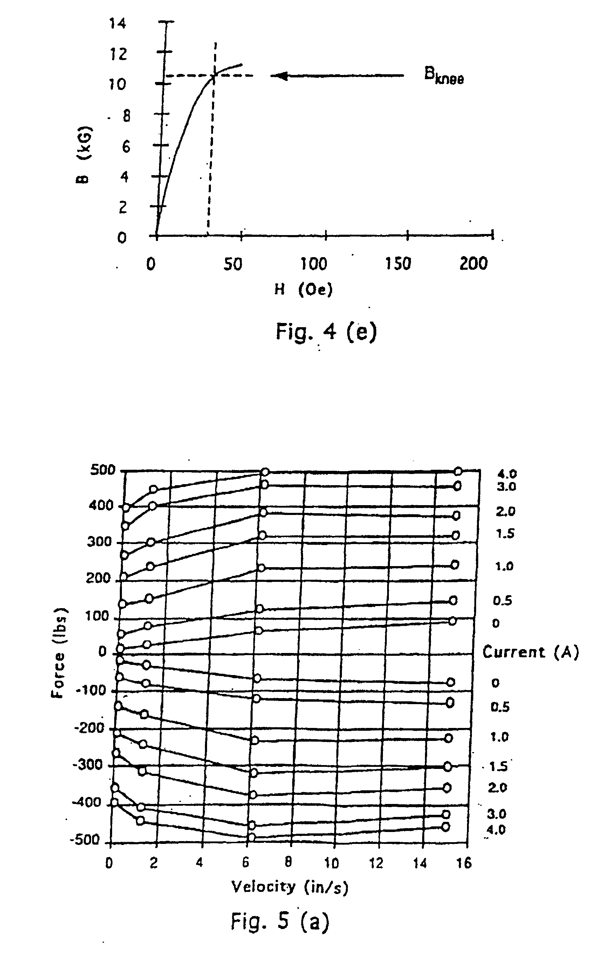

The value for $B_{opt}$ can be better understood by turning to **Figs. 4(a) - (c). Fig. 4(a)** is the plot of the responsiveness of the MR fluid earlier described to magnetic field strength (magnetic flux density B vs magnetic field strength H). The magnetic flux density B has two component parts: $B_{intrinsic}$, that is, solely attributable to the fluid, and a magnetic field component having a value of $\mu_0 H$, where $\mu_0$ is a magnetic permeability constant, and H is the strength of the magnetic field which can be approximated by multiplying the number of turns N in coil 40 times the current I through coil 40 divided by twice the gap g. $B_{intrinsic}$, or the magnetic polarization J, as it is also known, is equal to the total flux density B less the component attributable to the field strength. That is,

$$B_{intrinsic} = J = B - \mu_0 H$$

**Fig. 4(b)** is a plot of J vs H for the same MR fluid represented in **Fig. 4(a)**. It is difficult to identify, with any precision, where the optimum operational point is for this MR fluid by looking only at **Fig. 4(b)**. The curve suggests that there is a non-linear increase in the value of B for H values between 100,000 and 318,000 A/m (1300 and 4000 oersteds). A more definitive method of determining a value of $B_{opt}$ is to plot the square of J vs H. This curve is shown in **Fig. 4(c)**. $B_{opt}$ is associated with the field strength H at which the slope of the $J^2$ vs H curve ($\frac{d(J^2)}{d(H)}$) equals $\frac{J^2}{H}$, that is at the point of tangency to the curve for the curve's secant tangent. For this MR fluid and, indeed, for many of the fluids which have been tested, $B_{opt}$ occurs at a value of H=100,000 A/m (1300 oersteds), and for this fluid has a value of .635 tesla (6350 gauss) as seen in Fig. 4(a).

While this is a valid operational criteria, it is desirable to have as much energy in the fluid as possible and as little in the steel; that is, operationally we would like the ratio of $\frac{E_f}{E_s}$ to be as large as possible where $E_f$ is the energy in the fluid and $E_s$ is the energy in the steel. $E_f$ and $E_s$ are given by the following expressions:

$$E_f = \frac{1}{2} B_f H_f V_f$$

where $V_f$ is the operational volume of fluid, and

$$E_s = \frac{1}{2} B_s H_f V_s.$$

where $V_s$ is the operational volume of the steel.

Since,

$$V_f = 2 A_{pole} \, g$$

and

$$V_B = A_{core} L_s,$$

then

$$\frac{E_f}{E_s} = \frac{\frac{1}{2} B_f H_f A_{pole} \, g}{\frac{1}{2} B_s \, H_s \, A_{core} \, L_s} \approx \frac{2 \, H_f g}{H_s \, L_s}$$

where $L_s$ is the length of the entire flux path through the steel.

The damper **16** must be operated below $B_{knee}$ for the steel as shown in **Fig. 4(d),** for conventional steels and **Fig. 4(e)** for powdered metals. It is readily apparent that $H_s$, and hence $E_s$, go up quite rapidly for increases in H above the value corresponding to $B_{knee}$ with little or no increase in the flux density, B. From **Fig. 4(d)**, $B_{knee}$ has a value of 1.4 tesla (14000 gauss). By way of example, then, for this MR fluid and this steel, the ratio of $B_{opt}$ to $B_{knee}$ has a value of .454. More generally, this ratio should be greater than 0.4. The dimensional parametric ratios should be greater than or equal to this critical value. The value for powdered metals will be larger since $B_{knee}$ occurs at a smaller value.

The $B_{opt}$ taken from **Fig. 4(c)** represents a minimum value. $B_{opt}$ can have higher values than B = .635 tesla, so long as the flux density in the steel is not greater than $B_{knee}$ and as long as the ratio $\frac{B_{opt}}{B_{knee}}$ remains equal to or less than the bottleneck ratios, $\frac{A_{core}}{A_{pole}}$, $\frac{A_{path}}{A}$. By increasing $B_{opt}$ above .635 tesla (6350 gauss), up to a maximum of about 1.011 tesla (10,110 gauss) at H = 279,000 A/m (3500 oersted) for this configuration, more energy is input to the fluid while maintaining these desired operational parameters. This increases the ratio $\frac{E_f}{E_s}$ enhancing performance. What these relationships really tell the damper designer is that beyond a certain point, it is necessary to depart from rule 1 (minimize $A_{core}$ and $A_{path}$) in order to permit additional energy to be input into the fluid, rather than operating the damper in an inefficient operational zone (e.g., above $B_{knee}$).

In order to demonstrate the importance of these relationships, three dampers were constructed and tested. The dimensions of these dampers are shown in Table I.

TABLE I

|  | Damper #1 | Damper #2 | Damper #3 |
|---|---|---|---|
| $D_{core}$ | 34mm | 30mm | 30mm |
| $D_{pole}$ | 43mm | 42mm | 42mm |
| $D_o$ | 57.2mm | 57.2mm | 57.2mm |
| $D_I$ | 46mm | 46mm | 46mm |
| $L_g$ | 10mm | 8.8mm | 15mm |
| N | 199 turns of 23 gauge wire | 125 turns of 22 gauge wire | 125 turns of 22 gauge wire |
| $A_{core}$ | 908mm$^2$ | 707mm$^2$ | 707mm$^2$ |
| $A_{pole}$ | 1350mm$^2$ | 1161mm$^2$ | 1978mm$^2$ |
| $A_{path}$ | 908mm$^2$ | 908mm$^2$ | 908mm$^2$ |
| $\dfrac{A_{core}}{A_{pole}}$ | 0.673 | 0.608 | 0.357 |
| $\dfrac{A_{path}}{A_{pole}}$ | 0.673 | 0.260 | 0.459 |

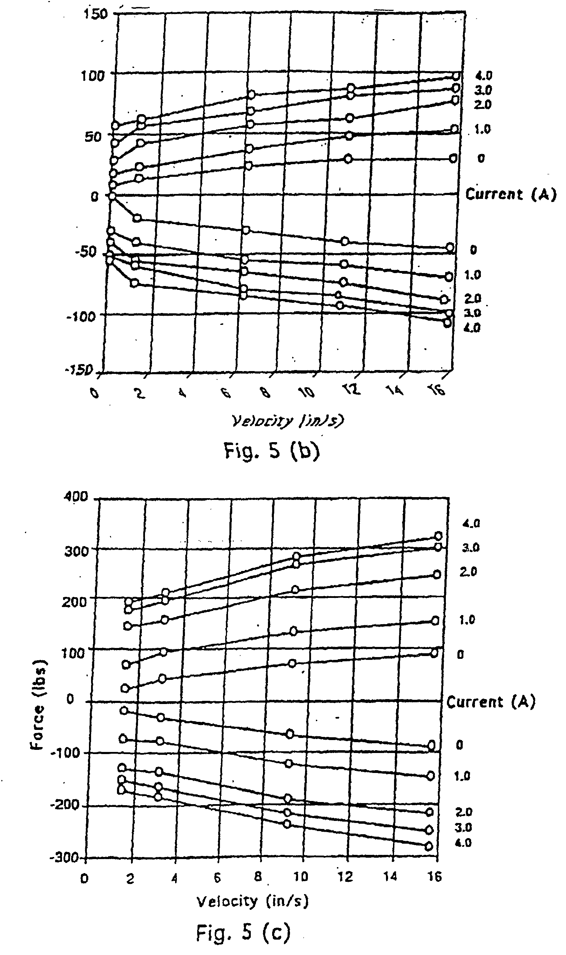

As was mentioned earlier, one desirable characteristic of an MR damper is for it to be velocity independent. **Figs. 5 (a) - (c)** establish that a. damper made in accordance with these parameters achieve velocity independence. The three dampers used to construct Table I were tested under substantially similar conditions and the results are plotted **in Figs. 5 (a) - (c),** respectively. Damper 1 meets the criteria for both ratios of $A_{core}$ and $A_{path}$ to $A_{pole}$, (i.e., both values are equal to or exceed .454), while Damper 2 is below specification for $A_{path}$ and Damper 3 is below specification for $A_{core}$. As the **Figs. 5 (a) - (c)** indicate, the performance for Damper 1 is substantially velocity independent, while those for Dampers 2 and 3 are not (as is indicated by the slope of the curves). Further, the optimized configuration of Damper 1 is capable of achieving significantly higher compression (positive) and extension (negative) forces for the same levels of current, as compared to those achievable by Dampers 2 and 3.

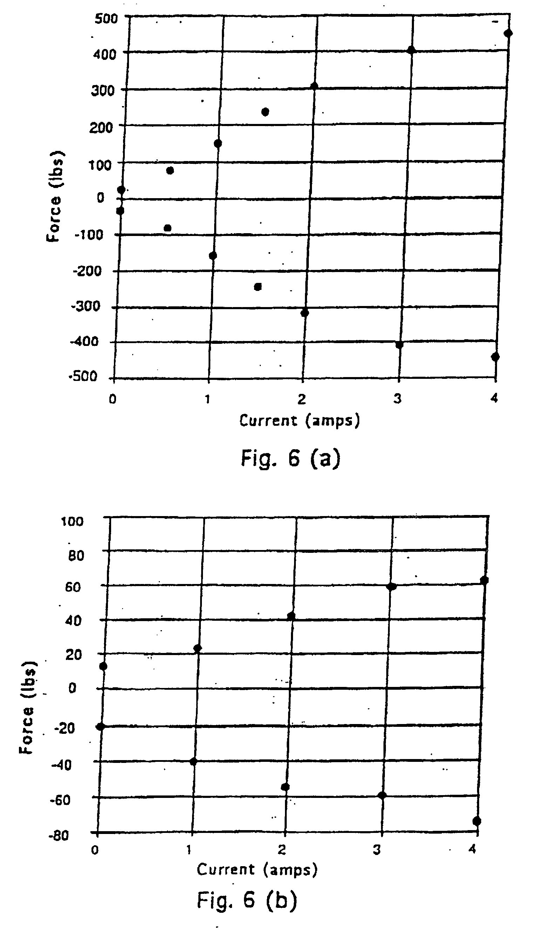

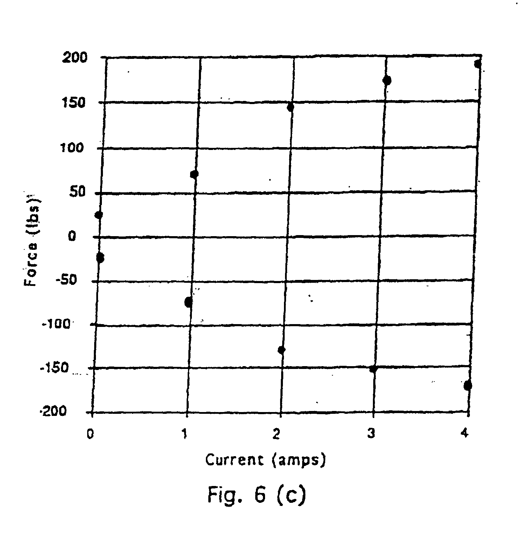

These results are confirmed by the plots shown in **Figs. 6 (a) (c)** wherein force is plotted vs current for these same three dampers for substantially similar stroke rates and stroke lengths. Specifically, **Fig. 6 (a)** for Damper 1 and **Fig. 6 (b)** for Damper 2 were taken at a stroke rate of 0.20 Hz, an amplitude of ±1.0 inch and a peak velocity of 1.3 in/sec. Data for **Fig. 6 (c)** for Damper 3 were taken at a stroke rate of 0.23 Hz, an amplitude of ±1.0 inch and a peak velocity of 1.3 in/sec.

**Figs. 7(a) - 7(c)** depict three embodiments of sealless dampers 16 according to the invention. One problem with the conventional damper design is preventing loss of the MR fluid which would result in diminished performance. Previously described embodiments have proposed the use of a secondary fluid with a combination scraper and seal to cope with this problem. A secondary problem is the need for an accumulator with the conventional designs to provide for fluid displaced by piston rod. With the sealless designs of **Figs. 7(a) - (c)**, the piston rod 32 extends above and below piston head 34 and has elastomer elements 70 and 72 which may be of frustoconical design, bonded to its upper and lower extents, respectively. Elastomer elements **70**, **72** are also bonded to housing 20 trapping a fixed volume of fluid **18**. An accumulator is unnecessary since there is no fluid displaced by piston rod 32 which cannot be accommodated by the volume on the opposite side of piston head 34. Depending on the bulge stiffness of the elastomer, the elements 70 and 72 can accommodate thermal expansion of the fluid. Electrical connection is made to coil 40 through shaft 32, as in earlier embodiments. Ears 74 (**Fig. 7(a)**) provide means for attaching housing 20 to one of the two elements to be isolated with piston rod 32 being attachable to the other.

The embodiment of **Fig. 7(b)** affords a means of providing greater resistance to compressive farces than to extension forces by pressurizing (or charging) chamber 76.

**Fig. 7(c)** shows a third sealless embodiment designed to provide extended stroke. As shown in **Fig. 7(c)** damper 16 is shown at the eompletion of a compression stroke. Disc shaped elastomer 70 is bonded at its outer extremity to a ring 77 which sits atop the inner cylinder of housing 20 and its inner periphery is bonded to element 80, which is preferably metallic. The upper inner periphery of element 80 slides freely relative to piston rod 32 by virtue of bearing 82. The lower inner periphery of element 80 is bonded to the outside of disc-shaped elastomer 71 whose inner periphery is bonded to cylindrical sleeve 75. Sleeve 75 moves with piston rod **32** but its use (being separable therefrom) facilitates manufacture.

A second element **80** has the outer periphery of disc-shaped elastomer 72 bonded to its inner upper periphery. The inner periphery of disc 72 is bonded to piston rod extension **33**. A fourth disc-shaped elastomer element 73 is bonded to the outer lower periphery of second element 80 and to ring 78 which is trapped between portions of housing 20 and, functionally, becomes a part thereof. This embodiment permits the throw length of damper 16 to be extended and, obviously, additional throw length could be added as necessary by stacking additional elements **80** with associated disc-shaped elastomers **70-73**.

Various changes, alternatives and modifications will become apparent to those of ordinary skill in the art following a reading of the foregoing description. For, example, while the piston motion being damped has implicitly been axial, it will be appreciated by those of ordinary skill in the art that dampers made in accordance with the specifics of this invention will be equally well adapted for damping rotary motion, or combinations of linear and rotary motion, as well. Further, although electromagnets have been described exclusively, it will be appreciated that permanent magnets may be utilized to provide some or all of the magnetic field. It is intended that all such changes, alternatives and modifications as come within the scope of the appended claims be considered part of the the present invention.

## Claims

1. Apparatus (16) for variably damping motion using a magnetorheological fluid, said apparatus comprising

   a) a housing (20) containing a volume of magnetorheological fluid (18);
   b) a piston (30) adapted for movement within said housing through said magnetorheological fluid, said piston connected to a piston rod (32) for movement therewith;
   c) valve means including

   i) a magnetic coil (40) associated with said housing and said piston for modifying at least one flow characteristic of said magnetorheological fluid, and
   ii) passageway means through which said magnetorheological fluid flows; the apparatus **characterised by**

   d) at least one elastomeric block (70, 72) fully bonded to an interior portion of said housing and to an exterior portion of at least one end of said piston rod;

   whereby said at least one end of said piston rod is fully sealed against loss of magnetorheological fluid.

2. The apparatus (16) of Claim 1 further comprising at least one elastomer block (70) at each end of a piston rod (32), each said elastomeric block being fully bonded to said housing (20) and to said piston rod.

3. The apparatus of Claim 2 wherein said elastomeric blocks (70, 71) are formed as twin disc-shaped elements, a first element (70) being fully bonded about its outer periphery to said cylindrical housing and a second element (71) which has a central aperture that is fully bonded about its inner periphery to a piston rod (32).

4. The apparatus of Claim 3 wherein said first element (70) also has a cylindrical aperture which is fully bonded to an outer periphery of a first end of an interconnecting element (80), a second end of said interconnecting element being fully bonded to the outer periphery of said second element (71).

5. The apparatus of Claim 1 wherein said piston rod (32) extends through said piston (30) and said at least one elastomeric block includes a first elastomeric block (70) fully bonded to a first interior portion of said housing and to a first end portion of said piston rod and a second elastomeric block (72) fully bonded to a second interior portion of said housing and to a second end portion of said piston (32);
   whereby both ends of said piston rod are fully sealed against loss of magnetorheological fluid.

6. The apparatus of Claim 1 wherein said elastomeric bloc comprises

   a) a first annular portion (70, 72) whose external periphery is fully bonded to said interior portion of said housing (20);
   b) a second annular portion (71) and (73) whose internal periphery is fully bonded to said exterior of said at least one end of said piston rod (32); and

c) an interconnecting element (80) having a first region fully bonded to an internal periphery of said first annular portion (70) and (72) and a second region fully bonded to an external periphery of said second portion (71) and (73).

**Patentansprüche**

1.  Vorrichtung (16) zur variablen Bewegungsdämpfung unter Verwendung eines magnetrheologischen Fluids, wobei die Vorrichtung folgendes umfaßt:

    a) ein Gehäuse (20), welches ein Volumen eines magnetrheologischen Fluids (18) enthält,
    b) einen Kolben (30), welcher zur Bewegung innerhalb des Gehäuses durch das magnetrheologische Fluid ausgebildet ist, wobei der Kolben mit einer Kolbenstange (32) verbunden ist, um sich mit dieser zu bewegen,
    (c) Ventilmittel mit

    i) einer Magnetspule (40), welche dem Gehäuse und dem Kolben zugeordnet ist, um wenigstens eine Strömungseigenschaft des magnetrheologischen Fluids zu verändern, und
    ii) Kanalmittel, durch welches das magnetrheologische Fluid strömt;

    **dadurch gekennzeichnet,**
    **daß** die Vorrichtung folgendes aufweist,
    (d) wenigstens einen Elastomerblock (70, 72), welcher vollständig an einen Innenabschnitt des Gehäuses und an einen Außenabschnitt wenigstens eines Endes der Kolbenstange geklebt ist;

    wodurch wenigstens ein Ende der Kolbenstange vollständig gegen Verlust von magnetrheologischem Fluid abgedichtet ist.

2.  Vorrichtung (16) nach Anspruch 1, **dadurch gekennzeichnet, daß** wenigstens ein Elastomerblock (70) an jedem Ende einer Kolbenstange (32) angeordnet ist, wobei jeder Elastomerblock vollständig an das Gehäuse (20) und die Kolbenstange geklebt ist.

3.  Vorrichtung nach Anspruch 2, **dadurch gekennzeichnet, daß** die Elastomerblöcke (70, 71) als zwei scheibenförmige Elemente ausgebildet sind, wobei ein erstes Element (70) an seinem Umfang vollständig an das zylindrische Gehäuse geklebt ist und ein zweites Element (71), welches eine mittige Öffnung aufweist, vollständig um seinen Innenumfang an eine Kolbenstange (32) geklebt ist.

4.  Vorrichtung nach Anspruch 3, **dadurch gekennzeichnet, daß** das erste Element (70) ebenfalls eine zylindrische Öffnung aufweist, welche vollständig an einen Außenumfang eines ersten Endes eines Verbindungselementes (80) geklebt ist, wobei ein zweites Ende des Verbindungselementes vollständig an den Außenumfang des zweiten Elementes (71) geklebt ist.

5.  Vorrichtung nach Anspruch 1, **dadurch gekennzeichnet, daß** sich die Kolbenstange (32) durch den Kolben (30) hindurch erstreckt und der wenigstens eine Elastomerblock einen ersten Elastomerblock (70), welcher vollständig an einen ersten Innenabschnitt des Gehäuses und an einen ersten Endabschnitt der Kolbenstange geklebt ist, sowie einen zweiten Elastomerblock (72) aufweist, welcher vollständig an einen zweiten Innenabschnitt des Gehäuses und einen zweiten Endabschnitt der Kolbenstange geklebt ist, wodurch beide Enden der Kolbenstange vollständig gegen Verlust des magnetrheologischen Fluids abgedichtet sind.

6.  Vorrichtung nach Anspruch 1, **dadurch gekennzeichnet, daß** der Elastomerblock folgendes umfaßt:

    a) einen ersten Ringabschnitt (70, 72), dessen Außenumfang vollständig an den Innenabschnitt des Gehäuses (20) geklebt ist;
    b) einen zweiten Ringabschnitt (71, 73), dessen Innenumfang vollständig an das Äußere des wenigstens einen Endes der Kolbenstange (32) geklebt ist; und
    c) ein Verbindungselement (80) mit einem ersten Bereich, welcher vollständig an einen Innenumfang des ersten Ringabschnittes (70) und (72) geklebt ist, und mit einem zweiten Bereich, welcher vollständig an einen Außenumfang des zweiten Ringelementes (71, 73) geklebt ist.

**Revendications**

1. Appareil (16) pour amortir de façon variable le mouvement à l'aide d'un fluide magnétorhéologique, ledit appareil comprenant :

   (a) un boîtier (20) contenant un volume de fluide magnétorhéologique (18) ;
   (b) un piston (30) adapté en vue d'un déplacement à l'intérieur dudit boîtier à travers ledit fluide magnétorhéologique, ledit piston étant connecté à une tige de piston (32) en vue d'un déplacement avec elle ;
   (c) un moyen de soupape comprenant :

      (i) une bobine magnétique (40) associée audit boîtier et audit piston pour modifier au moins une caractéristique d'écoulement dudit fluide magnétorhéologique ; et
      (ii) un moyen de passage à travers lequel ledit fluide magnétorhéologique s'écoule ;

   l'appareil étant **caractérisé par** :
   (d) au moins un bloc élastomère (70, 72) totalement lié à une partie intérieure dudit boîtier et à une partie extérieure d'au moins une extrémité de ladite tige de piston ;

   ce par quoi ladite au moins une extrémité de ladite tige de piston est totalement scellée hermétiquement à l'encontre d'une perte de fluide magnétorhéologique.

2. Appareil (16) selon la revendication 1, comprenant en outre au moins un bloc élastomère (70) à chaque extrémité d'une tige de piston (32), chaque bloc élastomère précité étant totalement lié audit boîtier (20) et à ladite tige de piston.

3. Appareil selon la revendication 2, dans lequel lesdits blocs élastomères (70, 71) sont formés en tant qu'éléments doubles en forme de disque, un premier élément (70) étant totalement lié autour de sa périphérie externe audit boîtier cylindrique et un second élément (71) qui a une ouverture centrale qui est totalement liée autour de sa périphérie interne à une tige de piston (32).

4. Appareil selon la revendication 3, dans lequel ledit premier élément (70) a également une ouverture cylindrique qui est totalement liée à une périphérie externe d'une première extrémité d'un élément d'interconnexion (80), une seconde extrémité dudit élément d'interconnexion étant totalement liée à la périphérie externe du second élément (71).

5. Appareil selon la revendication 1, dans lequel ladite tige de piston (32) s'étend à travers ledit piston (30) et ledit au moins un bloc élastomère comprend un premier bloc élastomère (70) totalement lié à une première partie intérieure dudit boîtier et à une première partie d'extrémité de ladite tige de piston et un second bloc élastomère (72) totalement lié à une seconde partie intérieure dudit boîtier et à une seconde partie d'extrémité dudit piston (32) ; ce par quoi les deux extrémités de ladite tige de piston sont totalement scellées hermétiquement à l'encontre de la perte de fluide magnétorhéologique.

6. Appareil selon la revendication 1, dans lequel ledit bloc élastomère comprend :

   (a) une première partie annulaire (70, 72) dont la périphérie externe est totalement liée à ladite partie intérieure dudit boîtier (20) ;
   (b) une seconde partie annulaire (71) et (73) dont la périphérie interne est totalement liée audit extérieur de ladite au moins une extrémité de ladite tige de piston (32) ; et
   (c) un élément d'interconnexion (80) ayant une première région totalement liée à une périphérie interne de ladite première partie annulaire (70) et (72) et une seconde région totalement liée à une périphérie externe de ladite seconde partie (71) et (73).

FIG. 1

FIG. 2

FIG. 3

Fig. 4 (a)

Fig. 4 (b)

Tangent Point:

$$\frac{J^2}{H} = \frac{d(J^2)}{d(H)}$$

$H_c$

H (kOe)

Fig. 4 (c)

$B_{knee}$

H (Oe)

Fig. 4 (d)

13

Fig. 4 (e)

Fig. 5 (a)

Fig. 5 (b)

Fig. 5 (c)

Fig. 6 (a)

Fig. 6 (b)

Fig. 6 (c)

Fig. 7(a)

Fig. 7(b)

Fig. 7(c)